# EUROPEAN PATENT SPECIFICATION

(11) **EP 3 372 368 B1**
(45) Date of publication and mention of the grant of the patent: **13.05.2020**
(21) Application number: 16870229.8
(22) Date of filing: 08.08.2016
(51) Int. Cl.: B29C 33/02, B29C 33/10, B29C 33/38, B29C 35/02, B29K 21/00, B29L 30/00, B29D 30/06, B29C 33/00, B29C 33/40, B29C 33/56

(54) **METHOD FOR MANUFACTURING RUBBER ARTICLE MOLD AND RUBBER ARTICLE MOLD**
VERFAHREN ZUR HERSTELLUNG EINES KAUTSCHUKARTIKELS UND KAUTSCHUKARTIKELFORM
PROCÉDÉ POUR LA FABRICATION DE MOULE POUR ARTICLE EN CAOUTCHOUC ET MOULE POUR ARTICLE EN CAOUTCHOUC

(30) Priority: 02.12.2015 JP 2015236076
(43) Date of publication of application: 12.09.2018
(73) Proprietor: Bridgestone Corporation, Tokyo 104-8340 (JP)
(72) Inventor: ISHIHARA, Yasuyuki, Tokyo 104-8340 (JP)
(74) Representative: Oxley, Robin John George
(86) International application number: PCT/JP2016/073354
(87) International publication number: WO 2017/094288

(56) References cited:
- EP-A2- 0 818 290
- WO-A1-2009/064068
- JP-A- H06 206 226
- JP-A- H10 264 169
- JP-A- 2002 361 632
- JP-A- 2014 136 318
- JP-A- 2014 136 318

## Description

### BACKGROUND OF THE INVENTION

### Field of the Invention

The present invention relates to a method for producing mold for rubber article comprising a plurality of split molds, and a mold for rubber article.

### Related Background of the Invention

In the mold for rubber article comprising the plurality of split molds, the plurality of split molds are combined together such that their parting surfaces are opposed to each other, and then a rubber article is molded by the plurality of split molds. Moreover, the rubber article is pushed to the split molds, heated by the split molds and cured. At that time, the air is trapped between the rubber article and the split molds and an insufficient filling of the rubber (bareness, air bubbles, etc.) may be caused in the rubber article. In particular, the tire which is a rubber article has complicated grooves in its tread part, and the split molds for tire have complicated projections corresponding to the grooves of the tire. Therefore, closed spaces between the split molds and the tire are formed by the projections, and the insufficient filling of rubber is likely caused.

To prevent the insufficient filling of rubber, the mold for rubber article has generally a ventilation mechanism (vent portion) in the split mold, and the air is exhausted by the ventilation mechanism. For example, the ventilation mechanism is through-holes (vent holes) formed in the split mold or slits (slit vents) formed between the split molds. The vent hall is easily formed in the split mold in comparison with the slit vent. However, whisker-shaped rubber (spew) is formed in the rubber article due to an intrusion of rubber into the vent hole, and the appearance or the initial performance of the rubber article is feared to be affected.

The slit vent is formed by slit forming parts of the parting surfaces between the split molds. Regarding to the slit vent, the intrusion of rubber into the slit vent and the production of burr of rubber in the rubber article are suppressed by regulating the width and the shape thereof. However, it is difficult to precisely form such a slit forming part of the slit vent on the parting surface of the split mold, and a high technique is needed for forming the slit forming part. Therefore, the production man-hour and the cost of the mold for rubber article may be increased.

In contrast, a metal mold for tire molding has been known, in which piece molds (split molds) are produced by casting and a gap (slit vent) between the piece molds is formed by a shim (cf. Patent Literature 1).

However, in the conventional metal mold described in the patent literature 1, the parting surface of the piece mold is feared to be deformed gradually by molding the tires repeatedly. In this case, it is difficult to maintain the state (e.g., shape, dimensions) of the slit vent for a long term, and the slit vent of the parting surface is gradually changed. Moreover, in cleaning the piece mold, if a cleaning method having strong erosive property (e.g., sandblast) is used, the slit forming part may be damaged, and thus the slit vent is feared to be changed.

### Prior Art

### Patent Literature

Patent Literature 1: Japanese Patent Laid-Open No. 2007-15152

Reference is also made to JP 2014-136318, which discloses a method for producing a mold for rubber article according to the preamble of Claim 1.

### SUMMARY OF THE INVENTION

### Problems to be Solved by Invention

The present invention was made in view of the above-described conventional problems and an object thereof is, in a mold for rubber article comprising a plurality of split molds, to easily form slit forming parts on parting surfaces of the split mold and to suppress a change in a slit vent formed by the slit forming parts.

### Means for solving Problems

The present invention comprises a method for producing a mold for rubber article according to claim 1.

Moreover, the present invention comprises a mold for rubber article according to claim 5.

### EFFECTS OF THE INVENTION

According to the present invention, in a mold for rubber article comprising a plurality of split molds, a slit forming part can be easily formed on a parting surface of the split mold and a change in a slit vent formed by the slit forming parts can be suppressed.

### BRIEF DESCRIPTION OF THE DRAWINGS

Figs. 1A to 1C are views illustrating a mold for rubber article of a first embodiment;
Figs. 2A to 2D are views illustrating a split mold of the mold for rubber article of the first embodiment;
Figs. 3A to 3D are views illustrating the split mold applied with plating;
Figs. 4A to 4D are views illustrating a production procedure of a mold for rubber article of a second embodiment;
Figs. 5A to 5D are views illustrating the production procedure of the mold for rubber article of the second embodiment;
Figs. 6A to 6D are views illustrating the production procedure of the mold for rubber article of the second embodiment;
Figs. 7A to 7D are views illustrating a production procedure of a mold for rubber article of a third embodiment;
Figs. 8A to 8D are views illustrating the production procedure of the mold for rubber article of the third embodiment;
Figs. 9A to 9D are views illustrating the production procedure of the mold for rubber article of the third embodiment;
Figs. 10A and 10B are views illustrating a production procedure of a mold for rubber article of a fourth embodiment;
Figs. 11A and 11B are views illustrating the production procedure of the mold for rubber article of the fourth embodiment;
Figs. 12A and 12B are views illustrating the production procedure of the mold for rubber article of the fourth embodiment;
Figs. 13A and 13B are views illustrating the production procedure of the mold for rubber article of the fourth embodiment;
Figs. 14A and 14B are views illustrating a production procedure of a mold for rubber article of a fifth embodiment;
Figs. 15A and 15B are views illustrating the production procedure of the mold for rubber article of the fifth embodiment;
Figs. 16A and 16B are views illustrating the production procedure of the mold for rubber article of the fifth embodiment; and
Figs. 17A and 17B are views illustrating the production procedure of the mold for rubber article of the fifth embodiment

### DESCRIPTION OF PREFERRED EMBODIMENTS

An embodiment of a method for producing mold for rubber article and a mold for rubber article of the present invention will be described by referring to the attached drawings.

The mold for rubber article of a present embodiment is a mold for rubber molding to mold a rubber article (a product made of rubber) and produced by the method for producing mold for rubber article of the present embodiment. In the following, a plurality of embodiments of the method for producing the mold for rubber article (in the followings, simply referred to as mold) and the mold will be described, taking the case that a mold for rubber article is a mold for tire (mold for tire molding) as an example. Therefore, the rubber article is a tire and the mold is used as a mold for tire in molding of the tire (at the time of vulcanization) and molds the tire.

### (First embodiment)

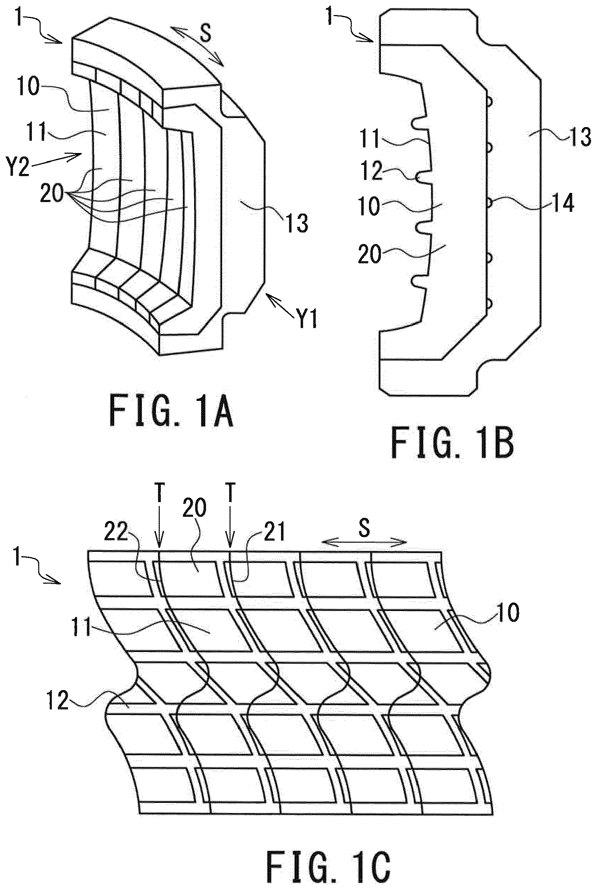

Figs. 1 are views illustrating a mold 1 of a first embodiment, and schematically illustrate a part of a mold 1. Fig. 1A is a perspective view of the mold 1, and Fig. 1B is a sectional view of the mold 1 viewed from the direction shown by the arrow Y1 in Fig. 1A. Fig. 1C is a front view of the mold 1 viewed from the direction shown by the arrow Y2 in Fig.1A and illustrates a molding part 10 of the mold 1.

As illustrated, the mold 1 is an outer mold for molding the outer surface of the tire, and includes a plurality of molding parts 10 (only one molding part 10 is shown in Figs. 1) to mold the tire and a holding member 13 to hold the molding part 10. The plurality of molding parts 10 are segment molds divided in the circumferential direction (mold circumferential direction S) of the mold 1, and are designed surface members (tread molds) each to mold a tread part of the tire.

By an opening and closing mechanism of the mold 1, the plurality of molding parts 10 are moved toward or away from each other together with the holding member 13 and the mold 1 is opened and closed. The plurality of molding parts 10 are moved away in the mold circumferential direction S while the mold 1 is opened, and are combined together into a ring shape while the mold 1 is closed. The molding part 10 has a molding surface 11 (contact surface) to come into contact with the tire and projections 12 (they are omitted in Fig. 1A) formed on the molding surface 11. The plurality of molding parts 10 receive the tire and mold the tire (here the tread part) by the molding surface 11 while they are combined together into the ring shape. The projection 12 on the molding surface 11 is formed into a shape corresponding to a groove of the tire and projected from the molding surface 11 to mold the groove on the tire.

The molding part 10 of the mold 1 includes a plurality of split molds 20. The plurality of split molds 20 each are a molding piece having the molding surface 11, and are divided in the mold circumferential direction S and held by one holding member 13. The plurality of molding parts 10 of the mold 1 each are divided into the plurality of split molds 20, and the plurality of split molds 20 each are attached to the holding member 13. The split mold 20 comes into contact with the tire through the molding surface 11 and molds the tire by the molding surface 11. At that time, the plurality of split molds 20 are combined together such that their parting surfaces 21, 22 are opposed to each other.

The parting surfaces 21, 22 of the split mold 20 are opposed parts (splitportions) of adjacent split molds 20 and are arranged at parting positions T (cf. Fig. 1C) of the plurality of split molds 20. The parting surfaces 21, 22 of the split mold 20 are combined together at the parting position T and opposed to each other. Even at a combined position of two adjacent molding parts 10, the split molds 20 of the two molding parts 10 are combined together such that their parting surfaces 21, 22 are opposed to each other. Therefore, the combined position of the two molding parts 10 is also the parting position T of the split molds 20.

The parting surfaces 21, 22 of the split mold 20 each are formed to be a curved surface, and the end surface of the holding member 13 is formed to be a curved surface corresponding to the parting surfaces 21, 22, too. Still further, in Fig. 1A and Fig. 1B, the shape of the parting surfaces 21, 22 of the split mold 20 and the shape of the end surface of the holding member 13 are simplified and are illustrated as plane surfaces. In this way, the shape of the parting surfaces 21, 22 of the split mold 20 and the shape of the end surface of the holding member 13 may be formed into the plane and may be formed into other shapes (e.g., flexural shape, zigzag shape).

The mold 1 includes a plurality of discharge passages 14 formed between the plurality of split molds 20 and the holding member 13. At the time of the molding of the tire, the air is exhausted through the slit vents of the molding part 10 into the discharge passages 14 without being trapped between the tire and the split molds 20. Moreover, the air is exhausted outside the mold 1 through the discharge passages 14. The slit vent is a slit-shaped vent part for exhausting the air between tire and the split mold 20, and the slit vent is formed by the slit forming parts on the parting surfaces 21, 22 between the adjacent split molds 20.

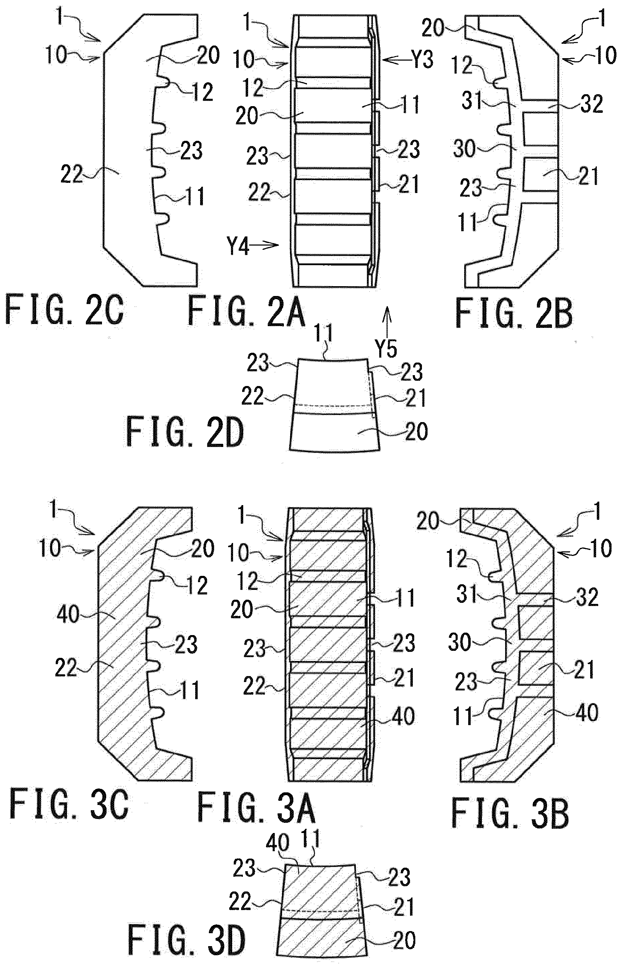

Figs. 2 are views illustrating a split mold 20 of the mold 1 of the first embodiment, and illustrate one simplified split mold 20 like Fig. 1A and Fig. 1B. Fig. 2A is a front view of the split mold 20, and Fig. 2B is a side view of the split mold 20 viewed from the direction shown by the arrow Y3 in Fig. 2A. Fig. 2C is a side view of the split mold 20 viewed from the direction shown by the arrow Y4 in Fig.2A and Fig. 2D is a bottom view of the split mold 20 viewed from the direction shown by the arrow Y5 in Fig. 2A.

As illustrated, a slit vent 30 includes an opening 31 which opens to the molding surface 11 of the split mold 20 and a discharging part 32 which discharges the air from the opening 31. The opening 31 is formed along edges of the parting surfaces 21, 22 on the molding surface 11 side and is formed over the whole of the edges of the parting surfaces 21, 22. The discharging part 32 connects the opening 31 and the outside of the split mold 20 and discharges the air at the opening 31 to the outside of the split mold 20. Here, the opening 31 and the discharge passage 14 are connected by the discharging part 32, and the air is discharged into the discharge passage 14 from the opening 31.

At the time of producing the split mold 20, the outer surface of the split mold 20 is processed so that the parting surfaces 21, 22 including slit forming parts 23 are formed on the split mold 20. The slit forming parts 23 are parts forming the slit vent 30 between the parting surfaces 21, 22. The slit forming parts 23 of the pair of parting surfaces 21, 22 include wall surfaces of the slit vent 30 and are arranged to be opposed to each other. The slit vent 30 is defined by the slit forming parts 23 opposed to each other, so that the slit vent 30 of the predetermined width is formed between the split molds 20. In addition, the width of the slit vent 30 is a distance between adjacent split molds 20 in the slit forming parts 23.

In one parting surface 21, a slit shape (the slit forming part 23) is formed by slit shape machining. The slit forming part 23 of the parting surface 21 is a recess formed on the parting surface 21, and is formed into a shape corresponding to the shape of the slit vent 30. The parting surface 21 including a recessed slit forming part 23 is formed on the split mold 20. The other parting surface 22 is a smooth surface and the slit forming part 23 in the parting surface 22 is a part opposed to the slit forming part 23 of the one parting surface 21.The parting surface 22 including a smooth slit forming part 23 is formed on the split mold 20. A space (gap) between a pair of slit forming parts 23 is formed into the slit vent 30 while the parting surfaces 21, 22 are opposed to each other.

After the formation of the parting surfaces 21, 22, plating (plating processing) is applied to the surface of the split mold 20. Therefore, at the time of forming the parting surfaces 21, 22, the parting surfaces 21, 22 of a pre-plating shape (middle shape) are formed on the split mold 20. The middle shape is a shape before it is applied with the plating and the split mold 20 and the parting surfaces 21, 22 are formed into the finishing shapes by plating. Sizes of parts of the split mold 20 to be applied with plating are those determined by subtracting the thickness of the plating from finishing sizes thereof. The split mold 20 formed in a shape smaller than the finishing shape by the thickness of the plating. Successively, the plating is applied to at least the parting surfaces 21, 22 of the split mold 20.

Figs. 3 are views illustrating a split mold 20 applied with the plating, and illustrated one split mold 20 like Figs. 2. InFigs. 3, a part applied with the plating is shown by hatching.

As illustrated, by the plating processing, the surface of the split mold 20 is plated so that a plating film 40 is formed on the surface of the split mold 20 and thus the surface of the split mold 20 is coated with the plating film 40. The plating film 40 is the plating layer of the predetermined thickness and is formed of hard metal. Here, the plating is iron plating, and the plating film 40 is an iron plating film. By iron plating, the plating film 40 of iron or iron alloy is formed.

By the plating processing, the parting surfaces 21, 22 after the formation are plated so that the parting surfaces 21, 22 of the split mold 20, in which the slit forming parts 23 have been formed, are coated with the plating film 40. The plating is applied to parts or the whole of the parting surfaces 21, 22, and thus the plating film 40 is formed on parts or the whole of the parting surfaces 21, 22. In this way, the parting surfaces 21, 22 including the slit forming parts 23 are formed into the finishing shapes, and the slit forming parts 23 are formed on the parting surfaces 21, 22 which are coated with the plating film 40. Here, the plating is applied to the whole of the split mold 20 and thus the whole of the split mold 20 is coated with the plating film 40.

The plating is applied to the whole of the parting surfaces 21, 22 (the slit forming part 23 and parts other than the slit forming part 23) and thus the whole of the parting surfaces 21, 22 are coated with the plating film 40. As for one parting surface 21, the recessed slit forming part 23 coated with the plating film 40 is formed on the parting surface 21. As for the other parting surface 22, the smooth slit forming part 23 is formed on the parting surface 22. At the time of molding of the tire, the parting surfaces 21, 22 coated with the plating film 40 come into contact with each other, so that the slit vent 30 is formed by the slit forming parts 23. The slit vent 30 which is formed by the slit forming parts 23 is a gap between the split molds 20, and is surrounded by the plating film 40 of the slit forming parts 23.

The mold 1 comprises the plurality of split molds 20, the plurality of slit forming parts 23 and the plurality of slit vents 30. At the time of molding of the tire, the plurality of split molds 20 are combined together at the parting positions T (cf. Figs. 1), and thus the plating films 40 of the parting surfaces 21, 22 come into contact with each other. The slit forming parts 23 are formed on the parting surfaces 21, 22 having the plating films 40 so as to form the slit vents 30 between the plurality of split molds 20. The mold 1 molds the tire by the plurality of split molds 20 while exhausting the air from the slit vents 30. In this way, the insufficient filling of rubber is suppressed to be caused in the tire.

As explained above, the mold 1 has the plating film 40 coating the parting surfaces 21, 22 in which the slit forming parts 23 have been formed. By virtue of the plating film 40, the parting surfaces 21, 22 are strengthened and thus the strength of the parting surfaces 21, 22 can be improved. As a result, the parting surfaces 21, 22 and the slit forming parts 23 are hardly deformed and a change of the slit vent 30 caused by molding the tire repeatedly can be suppressed. The state (e.g., shape, dimensions) of the slit vent 30 is maintained for a long term, too.

The states of the parting surfaces 21, 22 including the slit forming parts 23 are adjusted by plating, so that the slit forming parts 23 corresponding to the slit vent 30 can be easily formed on the parting surfaces 21, 22. Moreover, the slit forming part 23 can be accurately formed and the width and shape of the slit vent 30 can be easily regulated, too. Therefore, the intrusion of rubber of the tire into the slit vent 30 is suppressed and thus the production of burr of rubber is suppressed in the tire.

When the split mold 20 is made of aluminum alloy, the split mold 20 can be easily processed. Moreover, Vickers hardness (HV) of the plating film 40 is preferably 150-700 and the thickness of the plating film 40 is preferably 5-50 µm. When Vickers hardness is smaller than 150, the paring surfaces 21, 22 is feared that they cannot be sufficiently reinforced by the plating film 40, and when Vickers hardness is bigger than 700, the plating film 40 becomes susceptible to cracking. When Vickers hardness is 150-700, the parting surfaces 21, 22 can be surely reinforced by the plating film 40 while suppressing the generation of cracks in the plating film 40.

When the thickness of the plating film 40 is thinner than 5µm, the parting surfaces 21, 22 are feared that they cannot be sufficiently reinforced by the plating film 40. When the thickness of the plating film 40 is thicker than 50µm, variations in the thickness of the plating film 40 is likely to occur, and thus the accuracy of the width of the slit vent 30 is feared to be affected. When the thickness of the plating film 40 is 5-50µm, the parting surfaces 21, 22 can be surely reinforced by the plating film 40 and the accuracy of the width of the slit vent 30 can be improved.

The plating may be other than iron plating (e.g., nickel plating, chrome plating) . But, when the plating is nickel plating, an adhesion of rubber to the plating or a discoloration of rubber is feared to be arisen due to a chemical reaction between the plating and the rubber of the tire. Moreover, when the plating is copper plating, an adhesion of rubber to the plating is more likely to occur. When the plating is chromic plating, a crack is likely to occur depending on an increase in the thickness thereof, and it is difficult to increase the thickness of the plating film 40. Each of the above-mentioned problems can be dealt with by applying chromic plating after applying nickel plating, but the cost of the plating processing is increased. In contrast, when the plating is iron plating, a chemical reaction between the plating and the rubber are hardly caused and the cost of the plating processing can be reduced. Moreover, as for the plating, the iron plating is more preferable because the mechanical property of the plating film 40 is improved.

In addition, it has only to need to coat at least the parting surfaces 21, 22 of the split mold 20 with the plating film 40. Therefore, parts other than the parting surfaces 21, 22 of the split mold 20 may be allowed to be uncoated with the plating. Moreover, the split mold may be a mold (mold having the parting surfaces and the slit forming parts) for molding the parts other than the tread part of the tire. The plurality of molding parts 10 each may be a split mold. In this case, the molding part 10 is not divided into the plurality of split molds 20, and the plurality of molding parts 10 are combined together such that their parting surfaces are opposed to each other.

Next, a method for producing mold and a mold of another embodiment will be described, but basically, the method for producing mold of another embodiment is constituted like the method for producing the mold 1 of the first embodiment and exhibits a similar effect. Therefore, in the following, the description of matters different from those which are already described, will be described and the description of matters the same as those which are already described, will be omitted. Moreover, with respect to the mold of another embodiment, the same names and reference marks as those attached to the components of the mold 1 are used for components corresponding to those of the mold 1.

### (Second embodiment)

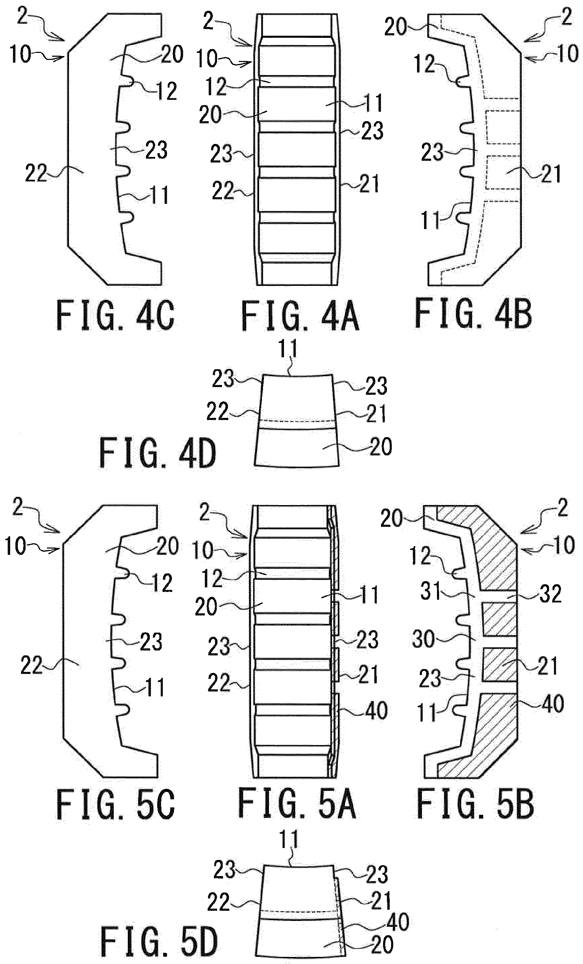

Figs. 4 to 6 are views illustrating a production procedure of a mold 2 of a second embodiment and illustrate one of the split molds 20 of the mold 2 like Figs. 2 and 3.

As illustrated, in the mold 2, the parting surfaces 21, 22 of the split mold 20 are smooth surfaces (cf. Figs. 4). The parting surfaces 21, 22 including the smooth slit forming parts 23 are formed on the split mold 20. In addition, in Figs. 4, the slit forming part 23 (forming position of the slit forming part 23) of one parting surface 21 is shown in a dotted line.

Before plating, a surface (part not coated with the plating film 40) of the split mold 20 except parts (parts coated with the plating film 40) of one parting surface 21 is covered with masking materials by masking processing (cf. Figs. 5). On the one parting surface 21, the masking processing is applied to the slit forming part 23 and the masking processing is not applied to the parts other than the slit forming part 23. The masking processing is applied to parts other than the parting surface 21 of the split mold 20. In this state, the plating is applied to the split mold 20 and thus the split mold 20 is coated with the plating film 40. Successively, the masking materials are removed from the split mold 20. In this way, the plating is applied to only the parts other than slit forming part 23 of the parting surface 21. On the parting surface 21, the slit forming part 23 is not coated with the plating film 40, and the parts other than the slit forming part 23 are coated with the plating film 40.

At the time of plating to the parting surface 21, by not applying the plating to the slit forming part 23 (forming position of the slit forming part 23), a plated part applied with the plating film 40 and a non-plated part (slit forming part 23) applied without the plating film 40 are formed on the parting surface 21. The slit forming part 23 is defined on the parting surface 21 by the plating film 40 of the plated part. The slit forming part 23 is a recess formed on the parting surface 21 and recessed in the parting surface 21 by the thickness of the plating film 40. In this way, in applying the plating to the parting surface 21, the recessed slit forming part 23 coated without the plating film 40 is formed on the parting surface 21 coated with the plating film 40.

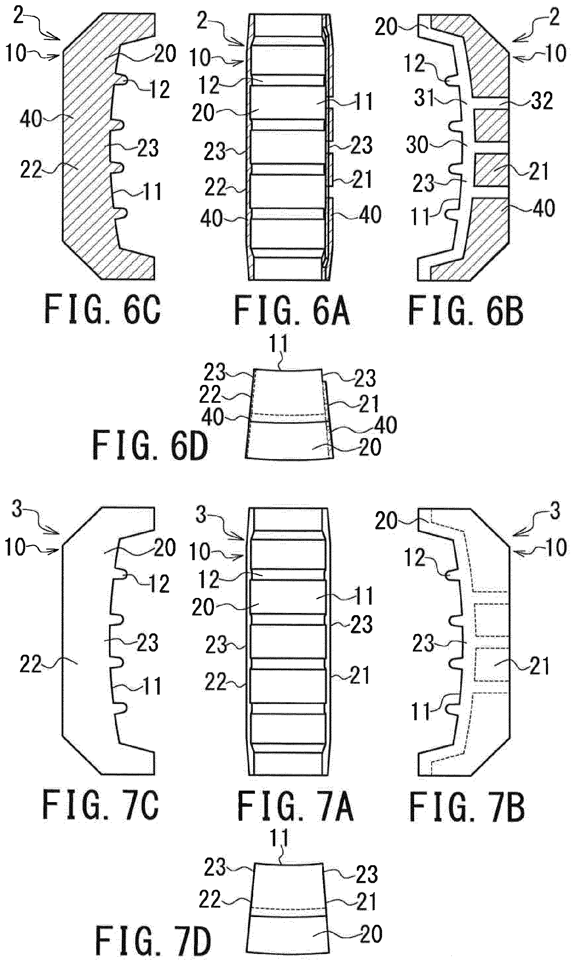

In addition to parts of one parting surface 21 (cf. Figs. 6), the other parting surface 22 may be applied with the plating. In this case, at the time of masking processing, the surface of the split mold 20, except parts of the one parting surface 21 and the other parting surface 22, is covered by masking materials. The masking processing is not applied to the whole of the other parting surface 22 in addition to parts of the one parting surface 21. As a result, the plating is applied to the whole of the parting surface 22, and thus the whole of the parting surface 22 is coated with the plating film 40. In this way, by applying the plating to the parting surface 22, the smooth slit forming part 23 coated with the plating film 40 is formed on the parting surface 22 coated with the plating film 40.

In the mold 2 of the second embodiment, the recessed slit forming part 23 is formed on the parting surface 21 by plating without machining the slit forming part 23 and attaching the shim to the parting surface 21 and so forth. As a result, the slit forming part 23 is more easily and precisely formed in comparison with by machining. Moreover, the slit forming part 23 can surely maintain its state as compared with attaching the shim. In addition, the plating may be applied to the parts other than the parting surfaces 21, 22 of the split mold 20

### (Third embodiment)

Figs. 7 to 9 are views illustrating a production procedure of a mold 3 of a third embodiment and illustrate one of the split molds 20 of the mold 3 like Figs. 2 and 3.

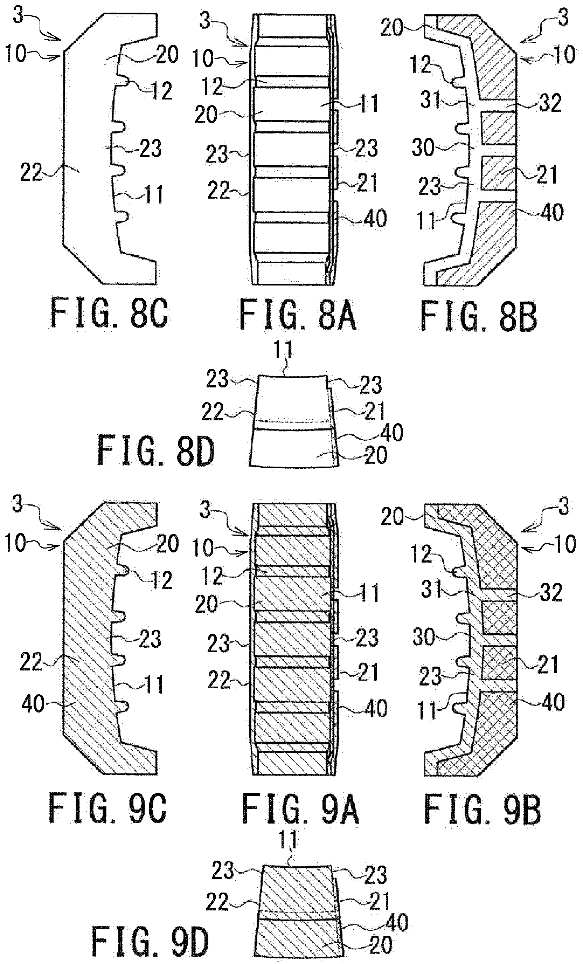

As illustrated, in the mold 3, the parting surfaces 21, 22 of the split mold 20 are smooth surfaces like the mold 2 of the second embodiment, and the parting surfaces 21, 22 including the smooth slit forming parts 23 are formed on the split mold 20 (cf. Figs. 7). Moreover, like the mold 2 (cf. Figs. 5), the recessed slit forming part 23 that is not coated with the plating film 40 is formed on one parting surface 21 by masking processing (cf. Figs. 8) . Subsequently, the plating is applied to the whole of the split mold 20 and thus the whole of the split mold 20 is coated with plating film 40 (cf. Figs. 9).

By applying the plating to the parting surfaces 21, 22, the slit forming parts 23 are formed on the parting surfaces 21, 22 which are coated with the plating film 40. In the one parting surface 21, the plating film 40 of the slit forming part 23 is made thinner than the plating film 40 of other parts in the parting surface 21 so that a thick part of the plating film 40 and a thin part (slit forming part 23) of the plating film 40 are formed on the parting surface 21. The slit forming part 23 is defined on the parting surface 21 by the relatively thick plating film 40. The slit forming part 23 is a recess formed on the parting surface 21 and recessed in the parting surface 21 by the thickness difference of the plating film 40. In this way, the recessed slit forming part 23 coated with the plating film 40 is formed on the parting surface 21 coated with the plating film 40. Moreover, in the other parting surface 22, the smooth slit forming part 23 coated with the plating film 40 is formed on the parting surface 22 coated with the plating film 40.

In the mold 3 of the third embodiment, the recessed slit forming part 23 is formed on the parting surface 21 by plating and an effect like that of the mold 2 of the second embodiment is provided. In addition, after the plating has been applied to the whole of the split mold 20, the plating may be applied only to the parts other than the slit forming part 23 of the parting surface 21 by masking processing. But, in this case, an edge (discontinuous part) of a second plating film 40 is exposed on the parting surface 21. In contrast, when the plating is applied to the split mold 20 by the procedure shown in Figs. 7 to 9, separation of the plating film 40 is suppressed without exposing the edge of the plating film 40.

### (Forth embodiment)

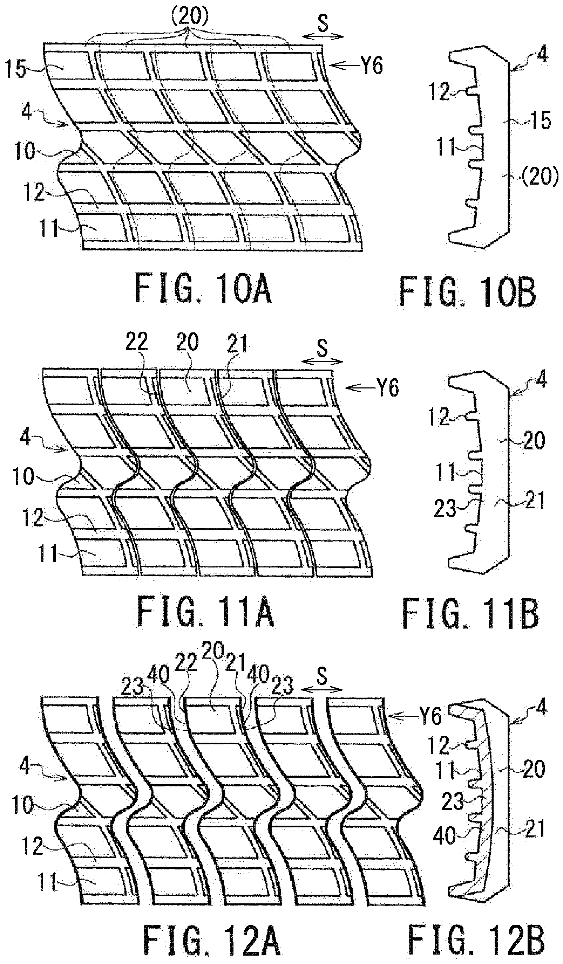

Figs. 10 to 13 are views illustrating a production procedure of a mold 4 of a fourth embodiment. Figs. 10A to 13A are front views illustrating the plurality of split molds 20 like Fig. 1C, and Figs. 10B to 13B are side views of the split molds 20 viewed from the direction shown by the arrow Y6 in Figs. 10A to 13A.

As illustrated, in the mold 4, a mold member 15 is divided by cutting, so that the split molds 20 are produced. The mold member 15 is one member including not less than two split molds 20, and here includes the plurality of splitmolds 20 constituting one molding part 10 of the mold 4.

The mold member 15 is integrally processed so that the plurality of split molds 20 are formed into a continuous shape (cf. Figs. 10). Then, by cutting (e.g., wire cutting, laser cutting, electron beam cutting), one mold member 15 is cut into each of the split molds 20 so as to be divided into the plurality of splits molds 20 (cf. Figs. 11). Here, the mold member 15 is cut by wire cutting (wire discharge processing) to form the parting surfaces 21, 22 which are cut surfaces on the split mold 20. Successively, the plating is applied to the parting surfaces 21, 22 which include the slit forming parts 23 formed by cutting and thus the parting surfaces 21, 22 are coated with the plating film 40 (cf. Figs. 12). The plating is applied to parts or the whole of the parting surfaces 21, 22, and thus the plating film 40 is formed on parts or the whole of the parting surfaces 21, 22.

The parting surfaces 21, 22 of the split mold 20 is defected in accordance with cutting of the mold member 15, so that a difference is arisen between cut shapes of the parting surfaces 21, 22 and allowable shapes thereof. For example, when the mold member 15 is cut by the wire cutting, a cut portion of the mold member 15 is removed by the total width (referred to as removal width) of the diameter of the wire and the discharge gap (length of the arc discharge). Therefore, when the plurality of split molds 20 are combined together, the length in the mold circumferential direction S of the plurality of split molds 20 is shortened. Or, the width of the gap (slit vent 30) between the split molds 20 is also feared to be partially widened.

For coping with this, by the plating film 40, defects of the parting surfaces 21, 22 are repaired and thus the shapes of the parting surfaces 21, 22 are corrected. At the same time, the slit forming parts 23 coated with the plating film 40 are formed on the parting surfaces 21, 22. The thickness of the plating film 40 is a thickness that is not lager than the defective thicknesses of the parting surfaces 21, 22. The parting surfaces 21, 22 are coated with the plating film 40 of the thickness same as the defective thicknesses or the plating film 40 which is thinner than the defective thicknesses, and thus the shapes of the parting surfaces 21, 22 are corrected by the plating film 40 corresponding to parts or the whole of the defect. In this way, the accuracy of the shapes of the parting surfaces 21, 22 are improved, and the lengths in the mold circumferential direction S of the plurality of split molds 20 are corrected.

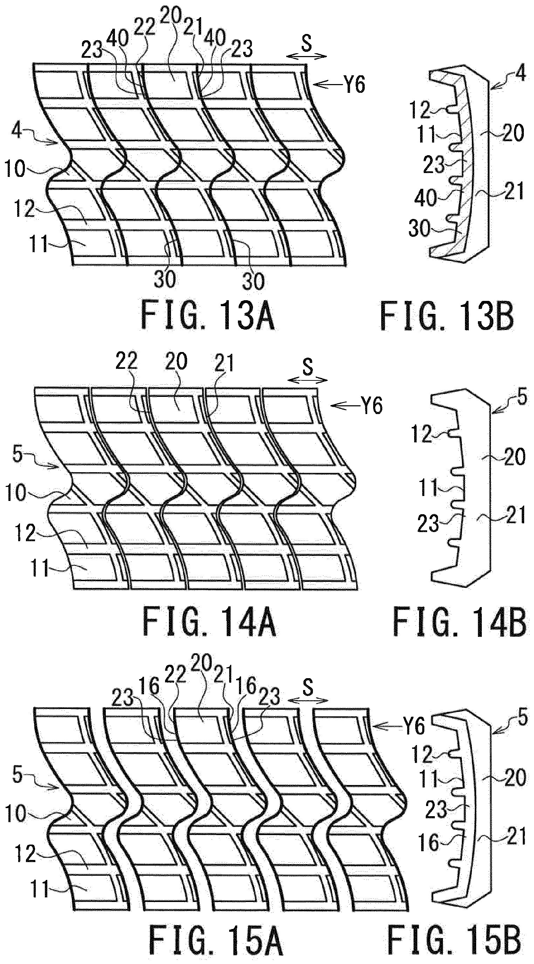

Here, the plating film 40 is coated on parts of the parting surfaces 21, 22 at the molding surface 11 side and formed along the edges of the parting surfaces 21, 22 at the molding surface 11 side. Moreover, the thickness of the plating film 40 is smaller than the defective thicknesses of the parting surfaces 21, 22. The slit forming parts 23 are parts coated with the plating film 40 of the parting surfaces 21, 22, and the slit vent 30 is a gap formed between the slit forming parts 23 of the parting surfaces 21, 22. When the plurality of split molds 20 are combined together (cf. Figs. 13), the parting surfaces 21, 22 including the slit forming parts 23 are opposed to each other without coming into contact with each other while the gap is formed therebetween . The slit vent 30 of the predetermined width is formed between the split molds 20 by the slit forming parts 23 of the parting surfaces 21, 22. In the parts other than the slit forming parts 23 of the parting surfaces 21, 22, a gap larger than the slit vent 30 is formed between the split molds 20.

In the mold 4 of the fourth embodiment, the slit vent 30 is precisely formed by adjusting the width of the slit vent 30 by plating. Moreover, the plurality of split molds 20 can be easily produced in comparison with the split mold which is individually processed by machining. Moreover, the plating may be also applied to the whole of the split mold 20.

### (Fifth embodiment)

Figs. 14 to 17 are views illustrating a production procedure of a mold 5 of a fifth embodiment and illustrate the split molds 20 of the mold 5 like Figs. 10 to 13.

As illustrated, in the mold 5, the mold member 15 is cut into each of the split molds 20 so as to form the parting surfaces 21, 22 which are cut surfaces on the split mold 20 (cf. Figs. 14) . Then, repairing members 16 are added to the parting surfaces 21, 22 formed on the split mold 20 (cf. Figs. 15). The repairing members 16 are provided with parts or the whole of the parting surfaces 21, 22, and thus the shapes of the parting surfaces 21, 22 are repaired by the repairing members 16.

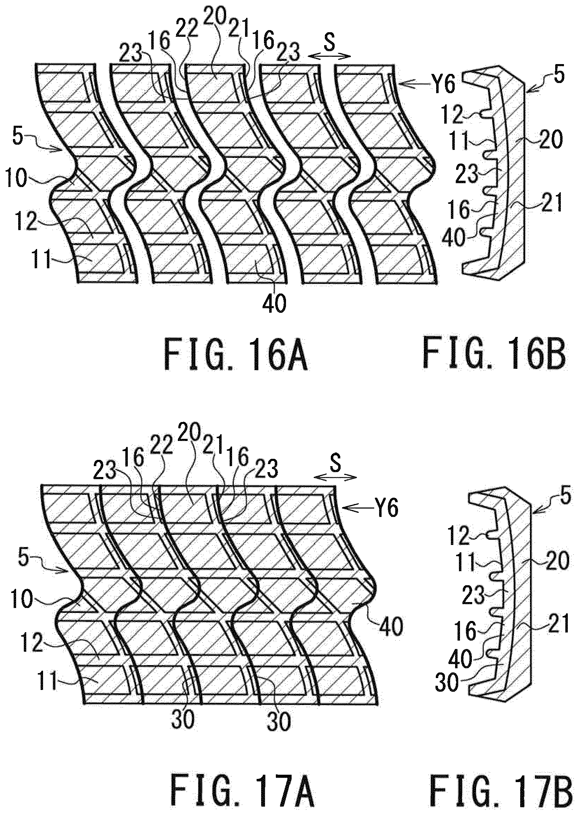

The repairing members 16 are, for example metal plates, and temporary jointed to the parting surfaces 21, 22 by temporary joint processing (resistance welding etc.). The thickness of the repairing member 16 is thinner than the defective thicknesses of the parting surfaces 21, 22, and the shapes of the parting surfaces 21, 22 are repaired by the repairing members 16 corresponding to parts of the defects of the parting surfaces 21, 22. Here, the repairing members 16 are added to parts of the parting surfaces 21, 22 at the molding surface 11 side and arranged along the edges of the parting surfaces 21, 22 at the molding surface 11 side. In this state, the plating is applied to the whole of the split mold 20 (cf. Figs. 16), so that the plating is applied to the parting surfaces 21, 22 to which the repairing members 16 have been added. In this way, the repairing members 16 and the parting surfaces 21, 22 are coated with the plating film 40, so that the slit forming parts 23 are formed on the parting surface 21, 22 coated with the plating film 40 while the shapes of the parting surfaces 21, 22 are corrected.

The thickness of the plating film 40 is thinner than the defective thicknesses of the parting surfaces 21, 22. Moreover, the total thickness of the repairing member 16 and the plating film 40 is the thickness that is equal to or less than the defective thicknesses of the parting surface 21, 22, and the repairing member 16 and the plating film 40 correspond to the parts of the defects of the parting surfaces 21, 22, respectively. Here, the parting surfaces 21, 22 to which the repairing members 16 have been added are applied with the plating film 40 so that the total thickness of the repairing member 16 and the plating film 40 is thinner than the defective thicknesses of the parting surfaces 21, 22. The defects of the parting surfaces 21, 22 are repaired by the repairing member 16 and the plating film 40, and thus the shapes of the parting surfaces 21, 22 are corrected.

The slit forming parts 23 are the parts of the parting surfaces 21, 22 to which the repairing members 16 have been added, and the slit vent 30 is a gap formed between the slit forming parts 23 of the parting surfaces 21, 22. When the plurality of split molds 20 are combined together (cf. Figs. 17), the parting surfaces 21, 22 including the slit forming parts 23 are opposed to each other without coming into contact with each other while the gap is formed therebetween. The slit vent 30 of the predetermined width is formed by the slit forming parts 23 of the parting surfaces 21, 22 between the split molds 20. In the parts except the slit forming parts 23 of the parting surfaces 21, 22, a gap that is larger than the slit vent 30 is formed between the split molds 20.

In the mold 5 of the fifth embodiment, an effect similar to that of the mold 4 of the fourth embodiment is provided. The defects of the parting surfaces 21, 22 are repaired by the repairing members 16, and thus the shapes of the slip surfaces 21, 22 can be easily corrected. Moreover, by virtue of the plating film 40, the repairing members 16 can be prevented from separating and a small level difference in the parting surfaces 21, 22 can be obtained.

For example, when the mold member 15 is cut by the wire cutting, the removal width of the mold member 15 is around 0.25-0.35 mm, and the defective thickness of the parting surfaces 21, 22 are around 0.125-0.175 mm. In this case, when the shapes of the parting surfaces 21, 22 are corrected only by the plating film40, the time for platingprocessing is prolonged. In contrast, the time for plating processing can be shortened by adding the repairing members 16 to the parting surfaces 21, 22. Moreover, the thickness of the plating film 40 is suppressed to be partially increased, and a protuberance is suppressed to be produced at the corner of the split mold 20. As a result, the surface of the plating film 40 can be smoothened.

In addition, the plating may be also applied to only the parting surfaces 21, 22 of the split mold 20. Moreover, the repairing member 16 is not limited to a metal plate and may be also a member capable of adding to the parting surfaces 21, 22. For example, the repairing member 16 may be a metal layer sprayed on the parting surfaces 21, 22 and may be a plating layer formed on the parting surfaces 21, 22 by plating (electroless nickel plating etc.).

As above, the mold has been described by taking the case that the rubber article is a tire as an example, but the rubber article may be other rubber article without being limited to a tire. The rubber article is an article made of rubber molded by a mold, for example, an article made of only rubber or an article made of rubber and other materials.

### (Production test of the mold)

For confirmation of the effect of the present invention, the molds were produced by the producing methods described above and the various tests were performed. Results of the tests (the first to fourth tests) will be sequentially described.

### (The first test)

The mold 1 (cf. Figs. 2 and 3) was produced by the producing method of the first embodiment and the slit vent 30 was investigated. The rubber molding part 10 was made of aluminum alloy (Japanese Industrial Standards: AC4C) and the rubber molding part 10 had a shape dividing a ring into nine (inside diameter: ϕ 600 mm, overall height: 300 mm, thickness: 30 mm) in the mold circumferential direction S. The holding member 13 (thickness: 20 mm) was made of steel (Japanese Industrial Standards: SS400) . The split mold 20 had a shape dividing the rubber molding part 10 into 5-7 in the mold circumferential direction S. In one parting surface 21, the slit forming part 23 (depth: 0.02 mm) was formed by machining. The iron plating was applied to the whole of the split mold 20 and thus the whole of the split mold 20 was coated with an iron plating film 40 (thickness: 25 µm, Vickers hardness (HV): around 500) .

In the test, the tire was repeatedly molded by the mold 1, and the split mold 20 was cleaned by sandblast. As a result, until the fifth cleaning, the width of the slit vent 30 was maintained to be 0.01-0.02 mm. In contrast, when the iron plating was not applied to the split mold 20, the width of the slit vent 30 became not more than 0.01 mm at many points of the slit vent 30, with the first cleaning. In this split mold 20, the air exhausting capacity of the slit vent 30 was decreased and thus the split mold 20 was not able to be used for the molding of the tire. From this, it was understood that a change of the width of the slit vent 30 of the mold 1 was suppressed.

Instead of the iron plating, nickel plating (thickness: 22 µm) was applied to the split mold 20, thereafter chrome plating (thickness: 3 µm) was applied to the split mold 20. In this split mold 20, when the split mold 20 was cleaned by sandblast, the damage resistance equal to that of the split mold 20 of the mold 1 was provided. However, in contrast to the appearance of the normal tire, the appearance (luster, color) of the tire after the molding was changed.

### (The second test)

The mold 2 (cf. Figs. 4 and 5) was produced by the producing method of the second embodiment and a tire was molded by the split mold 20 made of aluminum alloy (Japanese Industrial Standards: AC4C). The shape of the split mold 20 was the same as that of the split mold 20 in the first test and a part of the parting surface 21 was coated by the plating film 40 (thickness: 20 µm) . In this split mold 20, the deformation of the slit vent 30 was suppressed and the tire of the quality that was equal to that of the quality in the first test was able to be molded. Moreover, the damage of the split mold 20 was able to be suppressed by cleaning of the split mold 20 through a dry ice cleaning.

### (The third test)

The mold 3 (cf. Figs. 7 to 9) was produced by the producing method of the third embodiment and the performance of the split mold 20 was evaluated. The split mold 20 was made of aluminum alloy (Japanese Industrial Standards: AC4C), and the shape of the split mold 20 was the same as that of the split mold 20 in the first test. After the first (cf. Figs. 8) iron plating (thickness: 20 µm), the second iron plating (thickness: 10 µm) was applied to the whole of the split mold 20 (cf. Figs. 9). The thickness of the plating film 40 on the part other than the slit forming part 23 of the parting surface 21 was 30 µm and the thickness of the plating film 40 on the other parts was 10 µm. This split mold 20 provided the performance that was equal to that of the split mold 20 in the first test.

### (The fourth test)

The mold 4 (cf. Figs. 10 to 13) was produced by the producing method of the fourth embodiment and the slit vent 30 was investigated. The split mold 20 was made of aluminum alloy (casting material: Al-5% Mg), and the shape of the split mold 20 was the same as that of the split mold 20 in the first test. After casting of the mold member 15, the mold member 15 was processed by machining. Moreover, the mold member 15 was cut by wire cutting to form the split mold 20. The removal width of the mold member 15 was around 0.23 mm. The iron plating (thickness: 100 µm) was applied to parts (area of 20 mm from the molding surface 11) of the parting surfaces 21, 22. In this split mold 20, the width of the slit vent 30 was regulated to 0.010-0.025 mm and thus the width of the slit vent 30 was able to be maintained. As a result, the intrusion of rubber of the tire into the slit vent 30 was suppressed, and the production of burr of rubber in the tire was suppressed.

### (The fifth test)

The mold 5 (cf. Figs. 14 to 17) was produced by the producing method of the fifth embodiment and the slit vent 30 was investigated. The split mold 20 in pre-plating state was produced like the split mold 20 in the fourth test. After adding of the repairing members 16 to parts (area of 20 mm from the molding surface 11) of the parting surfaces 21, 22, iron plating (thickness: 10 µm) was applied to the whole of the split mold 20. The repairing member 16 was a plating layer formed of electroless nickel plating (thickness : 90µm). In this split mold 20, the width of the slit vent 30 was regulated to 0.020-0.025 mm and thus the width of the slit vent 30 was able to be maintained. As a result, the intrusion of rubber of the tire into the slit vent 30 was suppressed, and the production of burr of rubber in the tire was suppressed. Moreover, the accuracy of the slit vent 30 was increased higher than the slit vent 30 in the fourth test.

### (The sixth test)

In the sixth test, the mold member 15 was formed by a powder lamination forming in which metal powder (material: 18% Ni-based maraging steel) was sintered by a laser. The mold member 15 had a shape dividing a ring (inside diameter: ϕ 600 mm, height: 300 mm, thickness: 0.8 mm,) into nine in the mold circumferential direction S. The split mold 20 had a shape dividing the mold member 15 into 5-7 in the mold circumferential direction S. The mold member 15 was cut by wire cutting to form the split mold 20. The removal width of the mold member 15 was around 0.23 mm.

After the electroless nickel plating (thickness: 100 µm) had been applied to the whole of the split mold 20, the iron plating (thickness: 10 µm) was applied to the whole of the split mold 20. The electroless nickel plating was the repairing members 16 added to the parting surfaces 21, 22. The thickness of the split mold 20 after the plating was is approximately 1 mm. In this split mold 20, the width of the slit vent 30 was regulated to 0.020-0.025 mm and thus the width of the slit vent 30 was able to be maintained. As a result, the intrusion of rubber of the tire into the slit vent 30 was suppressed, and the production of burr of rubber in the tire was suppressed.

### Reference Signs List

1-5...mold
10...molding part
11...molding surface
12...projection
13...holding member
14...discharge passage
15...mold member
16...repairing member
20...split mold
21...parting surface
22...parting surface
23...slit forming part
30...slit vent
31...opening
32...discharging part
40...plating film
S...mold circumferential direction
T...parting position

## Claims

1. A method for producing a mold (3) for rubber article comprising; a plurality of split molds (20) which are combined together such that their parting surfaces (21, 22) opposed to each other to mold a rubber article; and slit forming parts (23) on the parting surfaces (21, 22) which form a slit vent (30) between the split molds (20), wherein it comprises steps of:
forming the parting surface (21, 22) including the slit forming part (23) on the split mold (20), and
plating the parting surface (21, 22) of the split mold (20) so as to coat the parting surface (21, 22) in which the slit forming part (23) is formed, with a plating film (40),
**characterised in that**
the plating film (40) of the slit forming part (23) is made thinner than the plating film (40) of other parts in the parting surface (21) of the split mold (20) so that the recessed slit formingpart (23) coated with the plating film (40) is formed on the parting surface (21).

2. The method for producing mold (3) for rubber article according to claim 1, wherein
in the forming step, one mold member (15) which includes not less than two split molds (20) is cut into each of the split molds (20) so as to form the parting surfaces (21, 22) which are cut surfaces on the split mold (20), and
the parting surfaces (21, 22) are coated with the plating film (40), so that the slit forming parts (23) coated with the plating film (40) are formed on the parting surface (21, 22) while the shapes of the parting surfaces (21, 22) are corrected.

3. The method for producing mold for rubber article according to claim 2, wherein
it comprises a step of adding repairing members (16) for correcting the shapes of the parting surfaces (21, 22) to the parting surfaces (21, 22) formed on the split mold (20),
and
in the plating step, the parting surfaces (21, 22) to which the repairing members (16) are added are coated with the plating film (40) by the repairing members (16) and the plating film (40) .

4. The method for producing mold (3, 5) for rubber article according to any of claims 1 to 3, wherein
plating is iron plating.

5. A mold (3) for rubber article comprising;
apluralityof splitmolds (20) which are combined together such that their parting surfaces (21, 22) opposed to each other to mold a rubber article; and slit forming parts (23) of the parting surfaces (21, 22) which form a slit vent (30) between the split molds (20),
wherein it has
a plating film (40) coating the parting surfaces (21, 22) in which the slit forming parts (23) are formed,
**characterised in that**
the plating film (40) of the slit forming part (23) is made thinner than the plating film (40) of other parts in the parting surface (21) of the split mold (20) so that the recessed slit formingpart (23) coated with the plating film (40) is formed on the parting surface (21).

## Patentansprüche

1. Verfahren zum Herstellen einer Form (3) für einen Kautschukartikel, Folgendes umfassend: mehrere geteilte Formen (20), die derart miteinander kombiniert sind, dass ihre Trennflächen (21, 22) einander gegenüberliegen, um einen Kautschukartikel zu formen, und Schlitzformungsteile (23) an den Trennflächen (21, 22), die eine Schlitzentlüftung (30) zwischen den geteilten Formen (20) bilden, wobei es Folgendes umfasst:
Formen der Trennfläche (21, 22), welche den Schlitzformungsteil (23) einschließt, an der geteilten Form (20), und
Plattieren der Trennfläche (21, 22) der geteilten Form (20), um so die Trennfläche (21, 22), in welcher der Schlitzformungsteil (23) geformt ist, mit einer Plattierungsfolie (40) zu überziehen,
**dadurch gekennzeichnet, dass**
die Plattierungsfolie (40) des Schlitzformungsteils (23) dünner hergestellt wird als die Plattierungsfolie (40) anderer Teile in der Trennfläche (21) der geteilten Form (20), so dass der ausgesparte Schlitzformungsteil (23), der mit der Plattierungsfolie (40) überzogen ist, an der Trennfläche (21) geformt wird.

2. Verfahren zum Herstellen einer Form (3) für einen Kautschukartikel nach Anspruch 1, wobei,
in dem Formungsschritt, ein Formelement (15), das nicht weniger als zwei geteilte Formen (20) einschließt, in jede der geteilten Formen (20) geschnitten wird, um so die Trennflächen (21, 22) zu bilden, die Schnittflächen an der geteilten Form (20) sind, und
die Trennflächen (21, 22) mit der Plattierungsfolie (40) überzogen werden, so dass die Schlitzformungsteile (23), die mit der Plattierungsfolie (40) überzogen werden, an der Trennfläche (21, 22) geformt werden, während die Gestalten der Trennflächen (21, 22) berichtigt werden.

3. Verfahren zum Herstellen einer Form für einen Kautschukartikel nach Anspruch 2, wobei
es den Schritt des Hinzufügens von Reparaturelementen (16) zum Berichtigen der Gestalten der Trennflächen (21, 22) zu den Trennflächen (21, 22), die an der geteilten Form (20) geformt sind, umfasst
und,
in dem Plattierungsschritt, die Trennflächen (21, 22), zu denen die Reparaturelemente (16) hinzugefügt werden, durch die Reparaturelemente (16) und die Plattierungsfolie (40) mit der Plattierungsfolie (40) überzogen werden.

4. Verfahren zum Herstellen einer Form (3, 5) für einen Kautschukartikel nach einem der Ansprüche 1 bis 3, wobei
das Plattieren Eisenplattieren ist.

5. Form (3) für einen Kautschukartikel, die Folgendes umfasst:
mehrere geteilte Formen (20), die derart miteinander kombiniert sind, dass ihre Trennflächen (21, 22) einander gegenüberliegen, um einen Kautschukartikel zu formen, und Schlitzformungsteile (23) an den Trennflächen (21, 22), die eine Schlitzentlüftung (30) zwischen den geteilten Formen (20) bilden,
wobei sie Folgendes aufweist:
eine Plattierungsfolie (40), welche die Trennflächen (21, 22), in denen die Schlitzformungsteile (23) geformt sind, überzieht,
**dadurch gekennzeichnet, dass**
die Plattierungsfolie (40) des Schlitzformungsteils (23) dünner hergestellt ist als die Plattierungsfolie (40) anderer Teile in der Trennfläche (21) der geteilten Form (20), so dass der ausgesparte Schlitzformungsteil (23), der mit der Plattierungsfolie (40) überzogen ist, an der Trennfläche (21) geformt ist.

## Revendications

1. Procédé de production d'un moule (3) pour un article en caoutchouc, comprenant : plusieurs moules fendus (20) combinés ensemble, de sorte que leurs surfaces de séparation (21, 22) sont opposées les unes aux autres pour mouler un article en caoutchouc ; et des parties formant une fente (23) sur les surfaces de séparation (21, 22) formant un évent de fente (30) entre les moules fendus (29), le procédé comprenant les étapes ci-dessous :
formation de la surface de séparation (21, 22) incluant la partie formant la fente (23) sur le moule fendu (20) ; et
placage de la surface de séparation (21, 22) du moule fendu (20) de sorte à revêtir la surface de séparation (21, 22), dans laquelle est formée la partie formant la fente (23), d'un film de placage (40) ;
**caractérisé en ce que** :
le film de placage (40) de la partie formant la fente (23) est configuré pour être moins épais que le film de placage (40) des autres parties dans la surface de séparation (21) du moule fendu (20), de sorte que la partie formant la fente évidée (23) revêtue du film de placage (40) est formée sur la surface de séparation (21).

2. Procédé de production d'un moule (3) pour un article en caoutchouc selon la revendication 1, dans lequel :
lors de l'étape de formation, un élément du moule (15) incluant pas moins de deux moules fendus (20) est découpé dans chacun des moules fendus (20), de sorte à former les surfaces de séparation (21, 22), constituant des surfaces coupées sur le moule fendu (20) ; et
les surfaces de séparation (21, 22) sont revêtues du film de placage (40), de sorte que les parties formant la fente (23) revêtues du film de placage (40) sont formées sur la surface de séparation (21, 22) pendant que les formes des surfaces de séparation (21, 22) sont corrigées.

3. Procédé de production d'un moule pour un article en caoutchouc selon la revendication 2, dans lequel :
le procédé comprend une étape d'addition d'éléments de réparation (16) pour corriger les formes des surfaces de séparation (21, 22) par rapport aux surfaces de séparation (21, 22) formées sur le moule fendu (20) ; et
lors de l'étape de placage, les surfaces de séparation (21, 22), auxquelles les éléments de réparation (16) sont ajoutés, sont revêtues du film de placage (40) par les éléments de réparation (16) et le film de placage (40).

4. Procédé de production d'un moule (3,5) pour un article en caoutchouc selon l'une quelconque des revendications 1 à 3, dans lequel :
le placage est un placage de fer.

5. Moule (3) pour un article en caoutchouc, comprenant :
plusieurs moules fendus (20) combinés ensemble de sorte que leurs surfaces de séparation (21, 22) sont opposées les unes aux autres pour mouler un article en caoutchouc ; et des parties formant une fente (23) des surfaces de séparation (21, 22), formant un évent de fente (30) entre les moules fendus (20) ;
dans lequel le moule comporte :
un film de placage (40) revêtant les surfaces de séparation (21, 22) dans lesquelles les parties formant la fente (23) sont formées ;
**caractérisé en ce que** :
le film de placage (40) de la partie formant la fente (23) est configuré pour être moins épais que le film de placage (40) des autres parties dans la surface de séparation (21) du moule fendu (20), de sorte que la partie formant la fente évidée (23) revêtue du film de placage (40) est formée sur la surface de séparation (21).
